# FASCICULE DE BREVET EUROPEEN

(11) **EP 1 891 393 B1**
(45) Date de publication et mention de la délivrance du brevet: **24.09.2014**
(21) Numéro de dépôt: 06763562.3
(22) Date de dépôt: 07.06.2006
(51) Int. Cl.: F41H 11/02, G01S 7/495

(54) **PROCEDE DE PROTECTION ANTIMISSILES DE VEHICULES ET DISPOSITIF DE MISE EN OEUVRE**
VERFAHREN ZUM SCHUTZ VON FAHRZEUGEN GEGEN LENKFLUGKÖRPER UND VORRICHTUNG DAFÜR
METHOD FOR ANTI-MISSILE PROTECTION OF VEHICLES AND IMPLEMENTING DEVICE

(30) Priorité: 17.06.2005 FR 0506178
(43) Date de publication de la demande: 27.02.2008
(73) Titulaire: THALES, 92200 Neuilly sur Seine (FR)
(72) Inventeur: MARQUIS, Emmanuel, F-78830 Bullion (FR); POCHOLLE, Jean-Paul, F-91290 La Norville (FR)
(74) Mandataire: Esselin, Sophie
(86) Numéro de dépôt international: PCT/EP2006/062972
(87) Numéro de publication internationale: WO 2006/134050

(56) Documents cités:
- EP-A- 1 455 199
- WO-A-2005/045465
- DE-A1-102004 007 405
- US-A- 3 127 608
- US-A- 4 989 006
- US-A- 5 175 664
- US-A- 5 726 855
- US-A1- 2004 118 270

## Description

La présente invention se rapporte à un procédé de protection antimissiles de véhicules ainsi qu'à un dispositif de mise en oeuvre de ce procédé.

L'invention est relative à la protection de véhicules tels que des aéronefs (avions, hélicoptères) ou des véhicules terrestres (camions, chars) contre la menace de missiles à guidage infrarouge, TV ou électromagnétique, et de façon plus générale, des missiles équipés d'un dispositif de désignation d'objectif, ou associés à un tel dispositif.

Les missiles portables, opérés par un seul individu, sont une menace considérable, tant sur le plan militaire que vis à vis d'une éventuelle utilisation terroriste. L'exemple bien connu du tir d'un missile IR sur un aéronef civil gros porteur au décollage par un acteur isolé placé au voisinage d'un aéroport, illustre ce type de menace.

Afin de lutter contre ce type de menaces, les solutions actuelles sont fondées sur le principe de détection de la menace avec traitement par contre-mesures appropriées. La détection est réalisée par des systèmes fixes (basés au sol) ou emportés sur les véhicules en mouvement et consiste soit en une détection radar, soit en détection optique. Cette détection utilise des principes de trajectographie pour déclencher les contres-mesures telles que des manoeuvres d'évitement, des leurres radar actifs ou passifs, des leurres infrarouges passifs ou actifs et des lasers, des munitions antimissiles,...

Les solutions actuelles présentent les inconvénients suivants. Le recours à un principe de détection puis contre-mesure sur la menace impose un temps de réaction très court par rapport au temps de vol minimal d'un missile, les durées de vols des missiles étant courtes. Cette contrainte impose un taux de fausses alarmes potentiellement élevé. Dans le cas où le système est embarqué sur un aéronef ou un véhicule, le coût et le poids du système sont des facteurs prépondérants dans le choix de la solution. Par ailleurs, l'intégration de systèmes de contre-mesure optronique sur les flottes déjà opérationnelle peut se faire par l'ajout d'un « pod » amovible qui peut modifier les caractéristiques aérodynamiques du porteur, ce qui a une incidence sur la consommation.

Le recours à des leurres, tels que des cartouches de brouillage infrarouge, est impossible à proximité des aéroports civils, du fait des risques d'incendie inhérents à de tels dispositifs. Le recours aux brouilleurs lasers demande un système de trajectographie missile/cible garantissant le pointage du faisceau dans le champ de vue du missile.

On connaît aussi un procédé de protection antimissiles de véhicules décrit dans le document US 3 127 608. Un plasma est créé par un accélérateur de particules et un faisceau d'électrons, embarqués dans les véhicules. La puissance continue du générateur utilisé est considérable pour franchir le seuil d'ionisation de l'air. Ce système est inefficace contre les système optroniques, voire pire car le plasma qui est « collé » au véhicule s'ajoute à la signature IR/visible du véhicule.

La présente invention a pour objet un procédé de protection antimissiles de véhicules qui ait un temps de réaction très court sans pratiquement aucune fausse alarme et ne nécessitant pas le recours à des moyens tels que des leurres du type précité ou à des brouilleurs laser classiques, tout en offrant une protection la meilleure possible.

La présente invention a également pour objet un dispositif de protection antimissiles de véhicules qui soit le plus simple le plus léger et le plus économique possible.

Conformément à la revendication 1, le procédé de protection antimissiles de véhicules conforme à l'invention est caractérisé en ce que l'on crée au moins un rideau de filaments de plasma entre ces véhicules et le pas de tir probable de ces missiles, ce rideau étant destiné à aveugler le dispositif de désignation d'objectif des missiles, le rideau de plasma est créé par un faisceau laser balayant une portion correspondante de l'espace dans un plan sensiblement perpendiculaire à la trajectoire probable des missiles à l'approche des véhicules menacés.

Selon une caractéristique avantageuse de l'invention, les filaments de plasma sont resserrés de façon à produire une nappe ionisée quasi continue.

Conformément à la revendication II, le dispositif de protection antimissiles conforme à l'invention comporte un laser impulsionnel, un dispositif de contrôle de la phase spectrale du laser et un dispositif de balayage spatial permettant d'orienter le faisceau laser selon différentes directions de l'espace.

La présente invention sera mieux comprise à la lecture de la description détaillée d'un mode de réalisation, pris à titre d'exemple non limitatif et illustré par le dessin annexé, sur lequel :
- la figure 1 est un schéma simplifié d'un exemple de dispositif de mise en oeuvre du procédé de l'invention pour une protection aéroportuaire, sa partie supérieure étant une vue de dessus, et sa partie inférieure une vue de côté,
- la figure 2 est un schéma simplifié d'un autre exemple de dispositif de mise en oeuvre du procédé de l'invention pour une protection aéroportuaire, sa partie supérieure étant une vue de dessus, et sa partie inférieure une vue de côté,
- la figure 3 est simplifié d'un exemple de dispositif de mise en oeuvre du procédé de l'invention pour une protection d'un avion en vol, et
- la figure 4 est simplifié d'un exemple de dispositif de mise en oeuvre du procédé de l'invention pour une protection d'un véhicule terrestre sa partie inférieure étant une vue de dessus, et sa partie supérieure une vue de face.

De façon résumée, l'invention consiste à réaliser un rideau de plasma à l'aide d'un laser disposé sur une zone particulière. L'écran de protection formé par ce rideau a pour objectif d'empêcher le verrouillage des dispositifs autodirecteurs des missiles sur la cible. L'invention utilise les propriétés des impulsions laser ultra-courtes (d'une durée de préférence inférieure à 10 ps) pour créer des filaments de plasma par ionisation de l'air. En effet, une impulsion laser qui se propage dans l'atmosphère peut être focalisée en un point donné de l'espace pour créer en ce point un plasma. Il se produit alors dans le prolongement de ce point un filament dans l'axe de propagation du faisceau. Ce filament se propage sur de longues distances (jusqu'à plusieurs kilomètres) et possède des propriétés d'émissivité semblables à celles d'un corps noir porté à haute température (> 1000°K voire 3000K). Ce filament a typiquement un diamètre de quelques centaines de microns.

Le laser mis en oeuvre par l'invention est un laser impulsionnel, ayant une fréquence de répétition des impulsions par exemple comprise entre 10 Hz et 10 kHz La durée des impulsions de ce laser est la plus brève possible, par exemple inférieure à 10ps. En effet, plus la durée de ces impulsions est longue, plus le laser doit délivrer d'énergie. Cette énergie est avantageusement comprise entre 1mJ et plusieurs Joules, sa valeur étant fonction en particulier de la durée des impulsions et des caractéristiques des filaments que l'on désire produire. La valeur de la longueur d'onde laser n'est pas critique. On utilise avantageusement les lasers disponibles dans le commerce, par exemple des milieux solides du type Titane-Saphir qui présentent un large spectre de fluorescence au voisinage de la longueur d'onde de 800nm, ce qui permet de délivrer des impulsions sub-picosecondes (« femtosecondes ») en exploitant la technologie CPA (« Chirp Pulse Amplifier »).

La création de l'écran de protection est faite de la façon suivante. On fait subir au faisceau de sortie du laser impulsionnel un balayage dans un plan, pour créer un rideau de filaments que l'on désire interposer entre le véhicule à protéger et l'autodirecteur ou système de visée d'un missile. Les filaments étant émissifs dans les bandes spectrales des capteurs dont sont généralement munis les autodirecteurs (ou dispositifs de désignation d'objectif) des missiles, il se produit un effet d'aveuglement et de masquage de la ligne de visée. L'écran formé par ce rideau de filaments peut être utilisé soit pour empêcher les tirs par neutralisation de l'acquisition, soit en brouillage du missile en vol par masquage de la cible et effet semblable à celui de leurres.

Le dispositif de l'invention, simplement dénommé ci-dessous « brouilleur », comporte essentiellement le laser tel que décrit ci-dessus, un dispositif de contrôle de la phase spectrale de ce laser et un dispositif de balayage spatial du faisceau de ce laser.

La réalisation d'un laser permettant de créer un filament d'air ionisé, ainsi que le contrôle de la phase spectrale de son faisceau en vue de contrôler la longueur de ce filament étant connu en soi, ne seront pas décrits plus en détail. Un dispositif de contrôle de la phase spectrale d'un faisceau laser est connu par exemple d'après le brevet français 2 751 095. On notera seulement que le dispositif de déflexion d'un faisceau laser étant également connu en soi, la présente description se rapporte plus particulièrement à la combinaison de ces divers moyens pour la réalisation d'un écran de filaments et à sa mise en oeuvre pour la protection de véhicules.

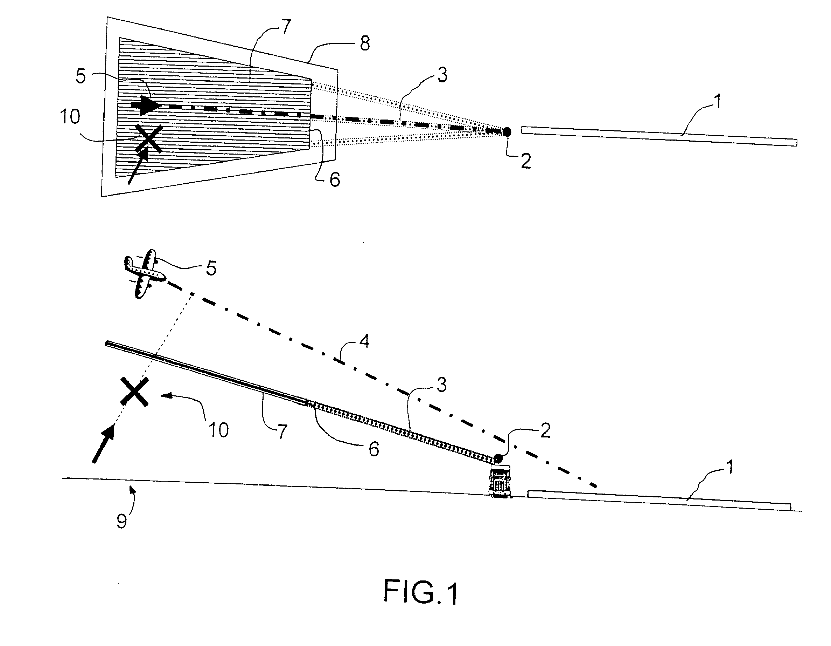

On a schématiquement représenté en figure 1 un premier exemple d'application de l'invention pour la protection aéroportuaire, dans lequel le dispositif de l'invention est utilisé pour créer un écran sous les plans de descente ou de montée des aéronefs. Ceci a pour effet de bloquer la ligne de visée d'un éventuel autodirecteur de missile prêt à être tiré de coté ou dans le secteur arrière de l'aéronef. Le dispositif est disposé en bout de piste et pointe en élévation avec un angle légèrement inférieur à celui des trajectoires suivies par les aéronefs. Un balayage en azimut permet de créer le rideau de filaments. Sur cette figure 1, la partie supérieure est une vue de dessus d'un exemple d'une configuration d'un dispositif de protection d'un aéroport de l'invention, tandis que la partie inférieure de cette figure est une vue de côté de cette même configuration.

On suppose, comme cela pourrait généralement être le cas, qu'une éventuelle menace d'attaque terroriste risque de se produire à proximité de la piste d'envol et/ou d'atterrissage 1 d'un aéroport, à partir du sol et sensiblement dans une zone où les aéronefs sont à basse ou très basse altitude. Pour protéger ces aéronefs, on dispose dans l'axe de la piste 1, dans le prolongement de son extrémité, à proximité de cette extrémité, un brouilleur 2 dont le faisceau laser, lors du fonctionnement du laser, en position de repos 3 (sans balayage), est dirigé dans l'axe de cette piste, à l'opposé de la piste, et dont l'angle, en élévation, est légèrement inférieur à l'angle de la trajectoire d'atterrissage 4 (ou d'envol) des aéronefs 5. Lors du fonctionnement du dispositif de protection, on fait subir au faisceau laser un balayage dans un plan, de façon sensiblement symétrique par rapport à la position de repos 3. Le plan dans lequel a lieu ce balayage est tel que son intersection avec le sol est perpendiculaire à l'axe de la piste 1. L'angle de déflexion du faisceau laser pour assurer ce balayage est fonction, en particulier, de la distance entre le brouilleur et le bord 6 du rideau 7 de filaments de plasma (bord formé par les points de création des filaments) et de l'étendue latérale de la zone 8 où l'on veut assurer la protection. On notera que cette zone de protection est légèrement plus étendue longitudinalement et latéralement que le rideau de filaments du fait que l'éblouissement par un filament de plasma d'un dispositif de désignation d'objectif de missile est provoqué dans un espace plus large que le diamètre de ce filament. La fréquence de ce balayage est fonction de la durée de vie des filaments (quelques centaines de microsecondes à quelques dizaines de microsecondes, voire quelques centaines de microsecondes, selon l'ionisation du milieu dans lequel sont créés ces filaments). Elle est par exemple de quelques kHz. Ainsi, l'écran de plasma 6 permet de protéger les aéronefs lorsqu'ils sont à proximité de la piste 1 (à portée de missiles) par rapport à des missiles tirés depuis un pas de tir 9 situé à proximité de la piste 1, la ligne de visée de tir issue de ce pas de tir (et passant par un point marqué par une croix 10 sur le dessin) pouvant être dirigée vers n'importe quel point de la zone protégée 8.

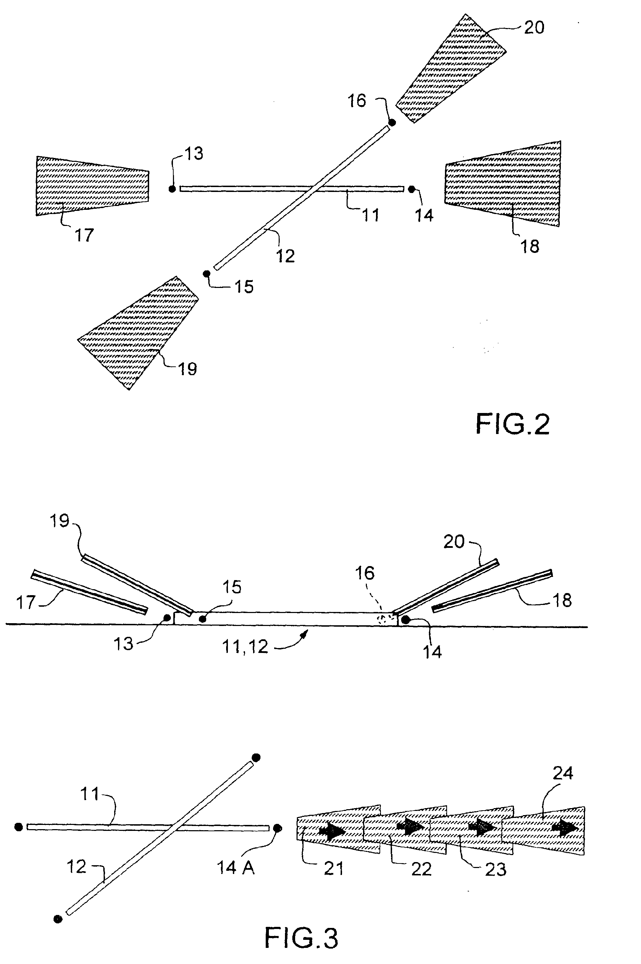

Bien entendu, pour assurer une meilleure protection d'aéroport, il est avantageux d'utiliser de façon croisée des brouilleurs multiples disposés aux extrémités des pistes d'envols et/ou à des distances différentes de ces extrémités. Un exemple simplifié d'une protection d'aéroport a été représenté en figure 2. Sur cette figure 2, on a schématiquement représenté deux pistes 11, 12 qui s'intersectent et qui ont des orientations différentes. Des brouilleurs 13 à 16 sont disposés près des extrémités des pistes 11 et 12 respectivement, selon une disposition similaire à celle du brouilleur 2 de la figure 1. Ces brouilleurs 13 à 16 créent des zones protégées 17 à 20, respectivement, similaires à la zone 8 de la figure 1. Dans le cas d'un site pour hélicoptère, le même principe est retenu pour protéger les couloirs d'approches ou de départs à basse altitude des hélicoptères.

Il est aussi possible d'utiliser un principe de déplacement du rideau de filaments qui suit la trajectoire du véhicule à protéger. Ce suivi peut être généré au niveau du laser par contrôle de la distance de focalisation et/ou par contrôle de la phase spectrale des impulsions afin de pré-compenser l'effet de dispersion du milieu de propagation qu'est l'atmosphère. On a schématiquement représenté en figure 3 un exemple de mise en oeuvre d'un tel procédé dans un aéroport similaire à celui de la figure 2, et comportant les pistes 11 et 12. On a schématisé une zone de protection mobile seulement pour un brouilleur 14A (similaire au brouilleur 14, mais pouvant produire une zone de protection mobile). Il est bien entendu que tous les autres brouilleurs 13A, 15A et 16A (respectivement similaires aux brouilleurs 13, 15 et 16) peuvent présenter les mêmes caractéristiques que le brouilleur 14A. On a schématisé différentes positions successives 21 à 24 de la zone de protection créée par le brouilleur 14A, cette zone de protection se déplaçant en synchronisme avec les déplacements de l'aéronef à protéger, avantageusement de façon que l'aéronef soit sensiblement près du centre de la zone de protection à chaque instant.

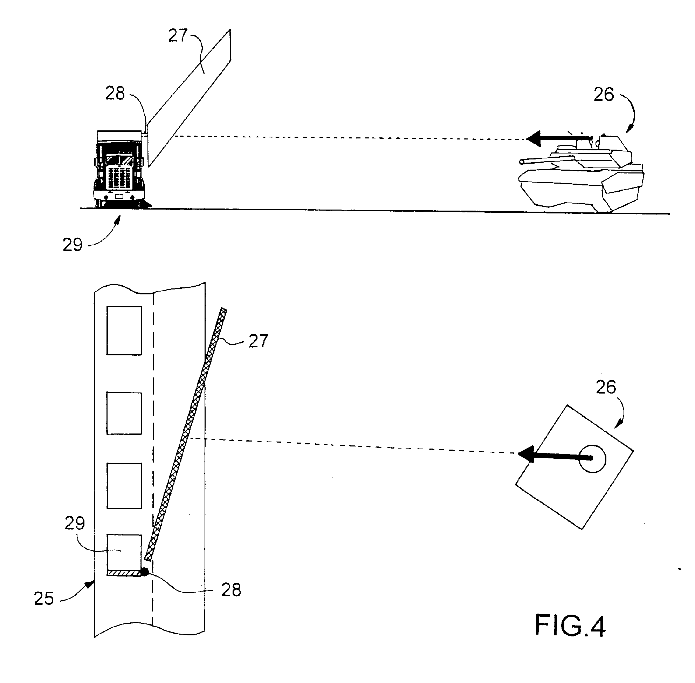

Bien entendu, comme schématisé en figure 4, le brouilleur de l'invention est applicable dans le cas de la protection d'un convoi 25 de mobiles au sol (des camions de transport, par exemple) vis à vis d'une menace sol-sol (un char de combat 26, par exemple). Dans ce cas, la géométrie du rideau de plasma 27 engendré à bord d'au moins l'un des véhicules (par exemple par le brouilleur 28 disposé dans le véhicule de queue 29) se présente sous la forme d'un plan vertical interposé entre l'ensemble du convoi 25 et la menace 26.

Selon un autre mode de réalisation de l'invention, on amorce le plasma du des filaments du rideau de filaments à l'aide d'un laser impulsionnel femtoseconde du type décrit ci-dessus, et dès que l'amorçage a eu lieu, au lieu d'entretenir l'ionisation de ces filaments à l'aide du même laser femtoseconde, on l'entretient à l'aide d'un laser de puissance du type impulsionnel (de quelques Watts à quelques kilowatts, selon la durée de ses impulsions), produisant des impulsions laser relativement longues (d'une durée de plusieurs nanosecondes à plusieurs microsecondes), dont la longueur d'onde n'est pas très critique (elle peut être située dans l'infrarouge, le visible ou l'ultraviolet).

Une application avantageuse du procédé de l'invention consiste à générer à distance un objet virtuel mobile dans l'espace, cet objet pouvant être soit un rideau de plasma soit un filament de plasma. Cet objet virtuel peut avoir les dimensions et la forme de véhicules habituels terrestres ou aériens, et ses déplacements peuvent, du fait de sa forte luminosité, soit simuler la trajectoire d'un véhicule dans l'espace, soit faire office de leurres capables d'attirer les capteurs optroniques d'autodirecteurs. Ainsi, on peut remplacer la protection décrite ci-dessus des véhicules réels ou la compléter, en attirant les missiles vers ces objets virtuels.

Les principaux avantages du procédé de l'invention et de son dispositif de mise en oeuvre sont qu'il n'utilise pas de détecteur de missile, et n'est donc pas contraint par une boucle de réaction rapide, qu'il contribue à leurrer les missiles à autodirecteurs optroniques et qu'il ne produit aucun résidu chimique, mécanique ou plus généralement de matériaux.

## Revendications

1. Procédé de protection antimissiles de véhicules dans lequel on crée au moins un plasma entre ces véhicules (5,25) et le pas de tir probable (9,26) de ces missiles, ce plasma étant destiné à aveugler le dispositif de désignation d'objectif des missiles, **caractérisé en ce que** le plasma consiste en un rideau de filaments de plasma (7,17 à 20, 21 à 24, 27) et le rideau de plasma est créé par un faisceau laser balayant une portion correspondante de l'espace dans un plan sensiblement perpendiculaire à la trajectoire probable des missiles à l'approche des véhicules menacés.

2. Procédé selon la revendication 1, **caractérisé en ce que** les filaments de plasma sont resserrés de façon à produire une nappe ionisée quasi continue.

3. Procédé selon la revendication 1 ou 2, **caractérisé en ce que** le rideau de plasma est créé et entretenu par un laser à impulsions ultra-courtes du type femtoseconde.

4. Procédé selon la revendication 1 ou 2, **caractérisé en ce que** le rideau de plasma est créé par un laser à impulsions ultra-courtes du type femtoseconde, et, qu'après amorçage du plasma, on l'entretient à l'aide d'un laser à impulsions plus longues que celles ayant produit l'amorçage.

5. Procédé selon l'une des revendications précédentes, **caractérisé en ce que** le faisceau laser est émis à partir d'un brouilleur fixe au sol (2, 13 à 16, 14A).

6. Procédé selon la revendication 5, **caractérisé en ce que** le rideau de filaments suit la trajectoire du véhicule à protéger (21 à 24).

7. Procédé selon la revendication 5 ou 6, **caractérisé en ce qu'**il est mis en oeuvre pour la protection aéroportuaire, que le faisceau laser est émis à partir d'un endroit situé près d'au moins une extrémité d'une piste d'envol ou d'atterrissage et que le rideau de filaments est créé sous les plans de descente ou de décollage des aéronefs.

8. Procédé selon l'une des revendications 1 à 4, **caractérisé en ce que** le faisceau laser est émis à partir d'un brouilleur monté à bord d'au moins un véhicule à protéger (29).

9. Procédé selon la revendication 8, **caractérisé en ce que** le véhicule à bord duquel est monté le brouilleur fait partie d'un ensemble de véhicules à protéger (25).

10. Procédé selon l'une des revendications 1 à 9, **caractérisé en ce qu'**il est mis en oeuvre pour créer des objets virtuels mobiles dans l'espace.

11. Dispositif de protection antimissiles de véhicules pour la mise en oeuvre du procédé selon l'une des revendications 1 à 10, **caractérisé en ce qu'**il comporte
- un laser impulsionnel,
- un dispositif de contrôle de la phase spectrale du laser
et
- un dispositif de balayage spatial permettant d'orienter le faisceau laser formant un rideau de plasma dans un plan sensiblement perpendiculaire à la trajectoire probable des missiles à l'approche des véhicules menacés.

12. Dispositif selon la revendication 11, **caractérisé en ce que** le laser est du type femtoseconde.

13. Dispositif selon la revendication 11, **caractérisé en ce qu'**il comporte un premier laser du type femtoseconde et un deuxième laser impulsionnel à impulsions plus longues que celles du premier laser.

14. Dispositif selon l'une des revendications 11 à 13, **caractérisé en ce qu'**il est utilisé pour la protection aéroportuaire et qu'on en dispose à proximité d'au moins une des extrémités des pistes de l'aéroport.

15. Dispositif selon l'une des revendications 11 à 13, **caractérisé en ce qu'**il est disposé à bord d'un véhicule (29).

## Patentansprüche

1. Verfahren zum Schutz von Fahrzeugen gegen Lenkflugkörper, wobei mindestens ein Plasma zwischen diesen Fahrzeugen (5, 25) und der wahrscheinlichen Abschussbasis (9, 26) dieser Lenkflugkörper gebildet wird, wobei dieses Plasma dazu bestimmt ist, das Waltensystem der Lenkflugkörper zu blenden, **dadurch gekennzeichnet, dass** das Plasma aus einem Plasmafilamentvorhang (7, 17 bis 20, 21 bis 24, 27) besteht und der Plasmavorhang von einem Laserstrahl gebildet wird, der einen entsprechenden Abschnitt des Raums in einer zur wahrscheinlichen Flugbahn der Lenkflugkörper, die sich den bedrohten Fahrzeugen nähern, im Wesentlichen lotrechten Ebene abtastet.

2. Verfahren nach Anspruch 1, **dadurch gekennzeichnet, dass** die Plasmafilamente derart verdichtet sind, dass ein quasi durchgängiger ionisierter Teppich gebildet wird.

3. Verfahren nach Anspruch 1 oder 2, **dadurch gekennzeichnet, dass** der Plasmavorhang von einem Laser mit ultrakurzen Impulsen vom Typ Femtosekunde gebildet und aufrechterhalten wird.

4. Verfahren nach Anspruch 1 oder 2, **dadurch gekennzeichnet, dass** der Plasmavorhang von einem Laser mit ultrakurzen Impulsen vom Typ Femtosekunde gebildet wird und nach Starten des Plasmas mit Hilfe eines Lasers mit längeren Impulsen als den Startimpulsen aufrechterhalten wird.

5. Verfahren nach einem der vorangehenden Ansprüche, **dadurch gekennzeichnet, dass** der Laserstrahl von einem auf dem Boden stationären Störsender (2, 13 bis 16, 14A) gesendet wird.

6. Verfahren nach Anspruch 5, **dadurch gekennzeichnet, dass** der Filamentvorhang der Bewegungsbahn des zu schützenden Fahrzeugs (21 bis 24) folgt.

7. Verfahren nach Anspruch 5 oder 6, **dadurch gekennzeichnet, dass** es für den Schutz von Flugplätzen umgesetzt wird, dass der Laserstrahl von einer Stelle gesendet wird, die sich in der Nähe von mindestens einem Ende einer Start- oder Landebahn befindet und dass der Filamentvorhang unter den Lande- oder Startebenen der Luftfahrzeuge gebildet wird.

8. Verfahren nach einem der Ansprüche 1 bis 4, **dadurch gekennzeichnet, dass** der Laserstrahl von einem Störsender gesendet wird, der an Bord von mindestens einem zu schützenden Fahrzeug (29) montiert ist.

9. Verfahren nach Anspruch 8, **dadurch gekennzeichnet, dass** das Fahrzeug, an dessen Bord der Störsender montiert ist, zu einer zu schützenden Fahrzeuggruppe (25) gehört.

10. Verfahren nach einem der Ansprüche 1 bis 9, **dadurch gekennzeichnet, dass** es umgesetzt wird, um bewegliche virtuelle Objekte im Raum zu schaffen.

11. Vorrichtung zum Schutz von Fahrzeugen gegen Lenkflugkörper für die Umsetzung des Verfahrens nach einem der Ansprüche 1 bis 10, **dadurch gekennzeichnet, dass** sie aufweist:
- einen Impulslaser,
- eine Kontrollvorrichtung der Spektralphase des Lasers, und
- eine Vorrichtung zur Raumabtastung die es erlaubt, den den Plasmavorhang bildenden Laserstrahl in eine Ebene zu lenken, die zu der wahrscheinlichen Flugbahn der Lenkflugkörpern, die sich den bedrohten Fahrzeugen nähern, im Wesentlichen lotrecht ist.

12. Vorrichtung nach Anspruch 11, **dadurch gekennzeichnet, dass** der Laser vom Typ Femtosekunde ist.

13. Vorrichtung nach Anspruch 11, **dadurch gekennzeichnet, dass** sie einen ersten Laser vom Typ Femtosekunde und einen zweiten Impulslaser mit längeren Impulsen als der erste Laser aufweist.

14. Vorrichtung nach einem der Ansprüche 11 und 13, **dadurch gekennzeichnet, dass** sie für den Schutz von Flugplätzen verwendet wird und dass sie in der Nähe von mindestens einem der Enden der Bahnen des Flugplatzes zur Verfügung steht.

15. Vorrichtung nach einem der Ansprüche 11 bis 13, **dadurch gekennzeichnet, dass** sie an Bord eines Fahrzeugs (29) angeordnet ist.

## Claims

1. A method for the anti-missile protection of vehicles, wherein at least one plasma is created between said vehicles (5, 25) and the probable launching pad (9, 26) of said missiles, said plasma being designed to blind the targeting device of the missiles, **characterised in that** said plasma comprises a curtain of plasma filaments (7, 17 to 20, 21 to 24, 27) and said plasma curtain is created by a laser beam sweeping a corresponding portion of the space in a plane substantially perpendicular to the probable trajectory of the missiles approaching threatened vehicles.

2. The method according to claim 1, **characterised in that** said plasma filaments are tightened so as to produce a quasi-continuous ionised layer.

3. The method according to claim 1 or 2, **characterised in that** said plasma curtain is created and maintained by an ultra-short pulsed laser of the femtosecond type.

4. The method according to claim 1 or 2, **characterised in that** said plasma curtain is created by an ultra-short pulsed laser of the femtosecond type and, after the initiation of said plasma, it is maintained using a laser with pulses longer than those that produced the initiation.

5. The method according to any one of the preceding claims, **characterised in that** said laser beam is emitted from a fixed, ground-based jammer (2, 13 to 16, 14A).

6. The method according to claim 5, **characterised in that** said curtain of filaments follows the trajectory of the vehicle to be protected (21 to 24).

7. The method according to claim 5 or 6, **characterised in that** it is implemented for airport protection, that said laser beam is emitted from a location located near at least one end of a take-off or landing runway and that the curtain of filaments is created below the planes of descent or take-off of aircraft.

8. The method according to any one of claims 1 to 4, **characterised in that** said laser beam is emitted from a jammer mounted on board at least one vehicle to be protected (29).

9. The method according to claim 8, **characterised in that** the vehicle on-board which said jammer is mounted belongs to a group of vehicles to be protected (25).

10. The method according to any one of claims 1 to 9, **characterised in that** it is implemented to create virtual objects moving in space.

11. A device for the anti-missile protection of vehicles for implementing the method according to any one of claims 1 to 10, **characterised in that** it comprises:
- a pulsed laser;
- a device for controlling the spectral phase of said laser; and
- a spatial sweeping device for orienting said laser beam forming a plasma curtain in a plane substantially perpendicular to the probable trajectory of missiles approaching threatened vehicles.

12. The device according to claim 11, **characterised in that** said laser is of the femtosecond type.

13. The device according to claim 11, **characterised in that** it comprises a first laser of the femtosecond type and a second pulsed laser with pulses longer than those of said first laser.

14. The device according to any one of claims 11 to 13, **characterised in that** it is used for airport protection and that it is disposed in the vicinity of at least one of the ends of the runways of the airport.

15. The device according to any one of claims 11 to 13, **characterised in that** it is disposed on board a vehicle (29).
